(19) Europäisches Patentamt
European Patent Office
Office européen des brevets

(11) Veröffentlichungsnummer: **0 477 615 A1**

(12) # EUROPÄISCHE PATENTANMELDUNG

(21) Anmeldenummer: **91114979.7**

(22) Anmeldetag: **05.09.91**

(51) Int. Cl.[5]: **C08K 5/529**, C08L 51/04, C08L 33/08

(30) Priorität: **18.09.90 DE 4029536**

(43) Veröffentlichungstag der Anmeldung: **01.04.92 Patentblatt 92/14**

(84) Benannte Vertragsstaaten: **BE DE ES FR GB IT NL SE**

(71) Anmelder: **BAYER AG**

**W-5090 Leverkusen 1 Bayerwerk(DE)**

(72) Erfinder: **Piejko, Karl-Erwin, Dr.**
**Unterscheider Weg 7a**
**W-5060 Bergisch Gladbach 2(DE)**
Erfinder: **Braese, Hans-Eberhard, Dipl.-Ing.**
**Käthe-Kollwitz-Strasse 3**
**W-5000 Köln 71(DE)**
Erfinder: **Lütjens, Holger, Dr.**
**Rybniker Strasse 12**
**W-5000 Köln 80(DE)**

(54) **Polymerisatmischungen mit verbesserter Thermostabilität II.**

(57) Polymerisatmischungen aus Acrylatpfropfkautschuken, bestimmten speziellen Acrylatcopolymeren und gegebenenfalls harzartigen Vinylpolymerisaten, die spezielle Oxetanylgruppen-haltige Phosphite enthalten, besitzen eine verbesserte Thermostabilität und eignen sich u.a zur Herstellung von Folien.

EP 0 477 615 A1

Die Erfindung betrifft Polymerisatmischungen aus Acrylatpfropfkautschuken, bestimmten speziellen Acrylatcopolymeren und gegebenenfalls harzartigen Vinylpolymerisaten, die spezielle Oxetanylgruppen-haltige Phosphite enthalten.

Polymerisatmischungen aus Acrylatpfropfkautschuken, bestimmten speziellen Acrylatcopolymeren und gegebenenfalls harzartigen Vinylpolymerisaten, die sich zur Herstellung von flexiblen alterungsbeständigen Folien mit lederartigem Aussehen eignen und durch Kalandrieren und Tiefziehen verarbeitet werden können, sind in den Offenlegungsschriften DE-38 11 899 und 37 43 489 beschrieben. Die aus diesen Polymerisatmischungen hergestellten Folien weisen ein hohes Eigenschaftsniveau auf und besitzen eine gute Alterungsstabilität. Sie werden beispielsweise zur Innenverkleidung in Kraftfahrzeugen eingesetzt. Trotz der im Vergleich zu bisher üblichen, PVC-haltigen Folienformmassen guten Alterungsstabitität auch unter Wärmeeinwirkung, können bei hohen Verarbeitungstemperaturen und/oder langen Verarbeitungszeiten insbesondere in hellen Farbeinstellungen Verfärbungen der Folien auftreten, die eine exakte Farbeinstellung bzw. eine Reproduzierung heller Farben erschweren. Es bestand deshalb ein Bedarf nach Polymerisatmischungen mit einer weiter verbesserten Thermostabilität, welche die genannten Nachteile nicht aufweisen.

Es hat sich gezeigt, daß die für PVC- und/oder ABS-Formmassen üblichen Stabilisierungsmittel wie Alkylzinnmercaptide, phenolische oder aminische Antioxidantien keine Verbesserung der Alterungsstabilität bei den zuvor genannten Polymerisatmischungen bewirken.

Es wurde jedoch gefunden, daß spezielle Oxetanylgruppen-haltige Phosphite die Thermostabilität der obengenannten Polymerisatmischungen soweit verbessern, daß Verfärbungen auch bei höheren Verarbeitungstemperaturen und/oder längeren Verarbeitungszeiten stark vermindert sind.

Gegenstand der vorliegenden Erfindung sind daher Polymerisatmischungen aus Acrylatpfropfkautschuken, bestimmten speziellen Acrylatcopolymeren und gegebenenfalls harzartigen Vinylpolymerisaten, die 0,1 bis 8 Gew.-%, bevorzugt 0,5 bis 6 Gew.-%, Oxetanylgruppen-haltige Phosphite der Formel (I) oder (II)

$P(OR)_3$ (I)

oder

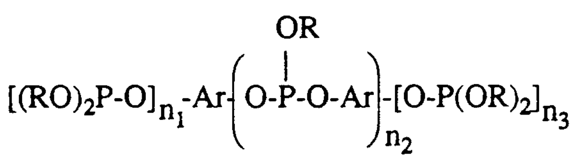

(II),

worin

$n_1$ 1 oder 2,
$n_2$ eine beliebige ganze Zahl von 0 bis 2 und
$n_3$ 1 oder 2 bedeuten,
R ein Rest der folgenden Formel

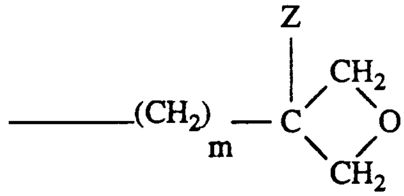

ist ,

worin

m = 0 oder 1 und
Z H, $CH_3$, $C_2H_5$, n-$C_5H_{11}$, $-CH_2-C_6H_5$, $-CH_2-O-C_6H_5$ oder $-CH_2-O-C_2H_5$ ist und
Ar den Rest eines einkernigen 2- oder 3-wertigen Phenols, den Rest der Formel

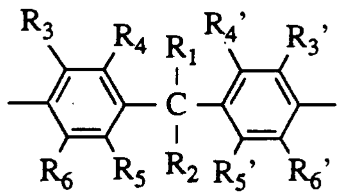

(B),

worin

$R_1$ und $R_2$ gleich oder verschieden sind und H, $C_1$-$C_{18}$-Alkyl, ein- oder mehrkerniges $C_3$-$C_6$-Cycloalkyl oder ein- oder mehrkerniges $C_6$-$C_{18}$-Aryl bedeuten und worin

$R_3$, $R_3'$, $R_4$, $R_4'$, $R_5$, $R_5'$, $R_6$ und $R_6'$ gleich oder verschieden sind und H, $C_1$-$C_{18}$-Alkyl, $C_1$-$C_{18}$-Alkoxy oder Chlor oder Brom sind,

oder

den Rest des $\alpha,\alpha$-Bis-(hydroxphenyl)-diisopropylbenzols bedeutet,

wobei für $n_2 \neq 0$ Ar unter sich gleich oder verschieden sein kann,

oder Mischungen der genannten Phosphite enthalten.

Bevorzugt sind Verbindungen der Formel (I) mit m = 1 und Z = $CH_3$ oder $C_2H_5$, weiterhin solche der Formel (II) mit m = 1 und Z = $CH_3$ oder $C_2H_5$ und Ar für Formel (B) mit $R_1 = R_2 = CH_3$ und $R_3$ - $R_6$ = $R_3'$ - $R_6'$ = H sowie $n_1 = 1$, $n_2 = 0$, $n_3 = 1$.

Ganz besonders bevorzugt sind Verbindungen der Formel (I) worin m = 1 und Z = $CH_3$ oder $C_2H_5$ ist.

Polymerisatmischungen aus Acrylatpfropfkautschuken, Acrylatcopolymeren und gegebenenfalls harzartigen Vinylpolymerisaten sind, wie zuvor erwähnt, in DE-38 11 899 und DE-37 43 489 beschrieben. Als weitere Bestandteile können den erfindungsgemäßen Polymerisatmischungen die in DE-38 41 669 beschriebenen Polymerisate aus cyclischen aliphatischen Estern und Carbonaten und/oder die in der DE 39 18405 beschriebenen Carbonatgruppen enthaltenden Polyester zugesetzt werden. Bevorzugt werden solche Polymerisatmischungen verwendet, die als dritte Komponente die harzartigen Vinylpolymerisate enthalten.

Die erfindungsgemäßen Polymerisatmassen können darüber hinaus die üblichen und bekannten Additive und Verarbeitungshilfsmittel in den bekannten Mengen enthalten.

Die erfindungsgemäßen Polymerisatmassen können u.a zur Herstellung von Folien der verschiedensten Art verwendet werden.

## Beispiele:

Eine Polymerisatmischung (Formmasse) wird nach der DE-OS 3 811 899 aus 45 Gew.-% eines dort beschriebenen Acrylatpfropfkautschuks (Komponente a1 der Beispiele), 40 Gew.-% eines vernetzten Butylacrylat/Acrylnitrilcopolymeren (Komponente b der Beispiele) und 15 Gew.-% eines Styrol/Acrylnitrilharzes (Komponente c der Beispiele) hergestellt. In diese Formmasse werden auf einer Walze jeweils 5 Gew.-% Polycaprolacton ($M_w$ = 40 000 g/Mol), 3 Gew.-% Titandioxidpigment (Bayertitan R-FKD), 0,3 Gew.-% Lichtblau 100 (der Fa. Bayer AG), 0,3 Gew.-% Loxiol G70 (der Fa Henkel) sowie die in der Tabelle aufgeführten Anteile der Komponenten A1 und A2 zugemischt. Die Thermostabilität wird durch Walzen bei 200 ° C geprüft und optisch anhand von evtl. auftretenden Farbveränderungen beurteilt.

Komponente A1:

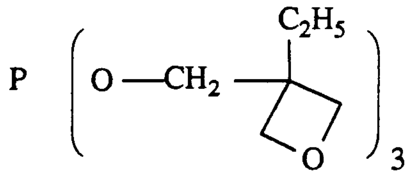

Komponente A2:

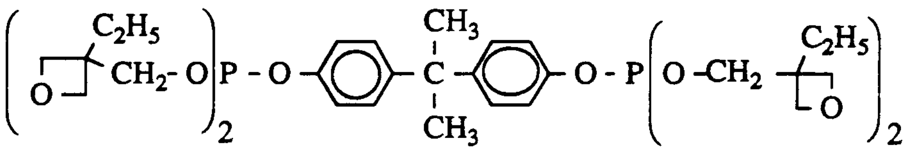

Tabelle

| Zusätze zu den Formmassen (in Gew.-Teilen bezogen auf 100 Gew.-Teile der Ausgangsformmasse) | |
|---|---|
| Beispiel-Nr. | Komponente/Gew.-Teile |
| 1 | A1/1 |
| 2 | A1/2 |
| 3 | A2/2 |
| 4 | A2/6 |

Analog dem Beispiel 1 wird eine Vergleichsformmasse ohne die Komponente A1 hergestellt.

Während sich die Vergleichsformmasse beim Walzen bei 200 °C bereits nach 10 Minuten leicht und nach 20 Minuten bereits stark von hellblau nach grün verfärbt hatte, zeigten die erfindungsgemäßen Formmassen 1,2 und 4 nach 10 Minuten praktisch keine Verfärbung, nach 20 Minuten ist erst ein schwacher grünlicher Schimmer erkennbar. Bei der Formmasse des Beispiels 3 ist nach 20 Minuten eine deutliche Grünverfärbung sichtbar.

**Patentansprüche**

**1.** Polymerisatmischungen aus Acrylatpfropfkautschuken, bestimmten speziellen Acrylatcopolymeren und gegebenenfalls harzartigen Vinylpolymerisaten enthaltend 0,1 bis 8 Gew.-% Oxetanylgruppen-haltige Phosphite der Formel

$P(OR)_3$ (I) ,

oder

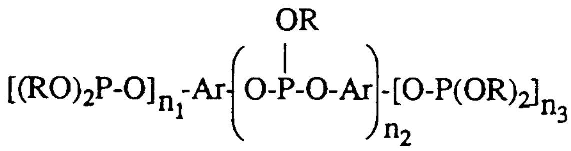

(II),

worin

$n_1$ 1 oder 2,

$n_2$ eine beliebige ganze Zahl von 0 bis 2 und

$n_3$ 1 oder 2 bedeuten,

R ein Rest der folgenden Formel

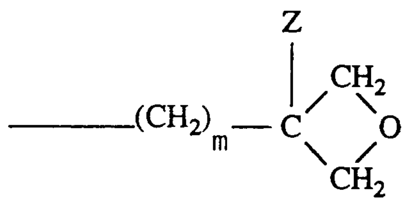

ist,

worin

m = 0 oder 1 und

Z H, $CH_3$, $C_2H_5$, n-$C_5H_{11}$, $-CH_2-C_6H_5$, $-CH_2-O-C_6H_5$ oder $-CH_2-O-C_2H_5$ ist und

Ar den Rest eines einkernigen 2- oder 3-wertigen Phenols, den Rest der Formel

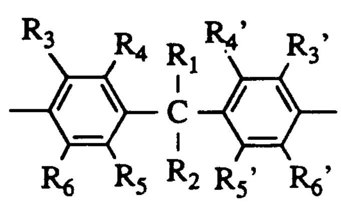

(B),

worin

$R_1$ und $R_2$ gleich oder verschieden sind und H, $C_1$-$C_{18}$-Alkyl, ein- oder mehrkerniges $C_3$-$C_6$-Cycloalkyl oder ein- oder mehrkerniges $C_6$-$C_{18}$-Aryl bedeuten und worin

$R_3$, $R_3$', $R_4$, $R_4$', $R_5$, $R_5$', $R_6$ und $R_6$' gleich oder verschieden sind und H, $C_1$-$C_{18}$-Alkyl, $C_1$-$C_{18}$-Alkoxy oder Chlor oder Brom sind,

oder

den Rest des $\alpha,\alpha$-Bis-(hydroxyphenyl)-diisopropylbenzols bedeutet,

wobei für $n_2 \neq 0$ Ar unter sich gleich oder verschieden sein kann,

oder Mischungen der genannten Phosphite.

**2.** Formmassen nach Anspruch 1, dadurch gekennzeichnet, daß die Oxetanylgruppen-haltigen Phosphite die Struktur (I) besitzen.

**Patentansprüche für folgenden Vertragsstaat : ES**

1. Verfahren zur Herstellung von Polymerisaten aus Acrylatpfropfkautschuken, bestimmten speziellen Acrylatcopolymeren und gegebenenfalls harzartigen Vinylpolymerisaten enthaltend 0,1 bis 8 Gew.-% Oxetanylgruppen-haltige Phosphite der Formel

$P(OR)_3$ (I) ,

oder

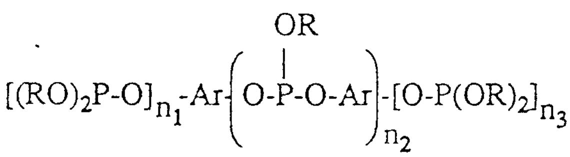

(II),

worin

| | |
|---|---|
| $n_1$ | 1 oder 2, |
| $n_2$ | eine beliebige ganze Zahl von 0 bis 2 und |
| $n_3$ | 1 oder 2 bedeuten, |
| R | ein Rest der folgenden Formel |

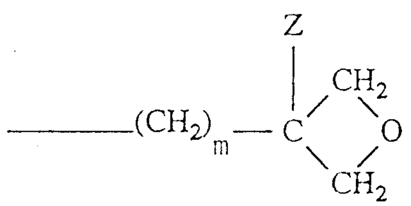

ist,

worin

| | |
|---|---|
| m = | 0 oder 1 und |
| Z | H, $CH_3$, $C_2H_5$, n-$C_5H_{11}$, $-CH_2-C_6H_5$, $-CH_2-O-C_6H_5$ oder $-CH_2-O-C_2H_5$ ist und |
| Ar | den Rest eines einkernigen 2- oder 3-wertigen Phenols, den Rest der Formel |

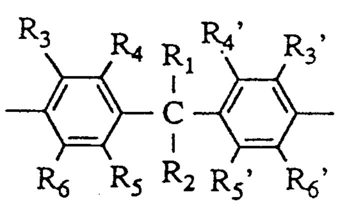

(B),

worin

| | |
|---|---|
| $R_1$ und $R_2$ | gleich oder verschieden sind und H, $C_1$-$C_{18}$-Alkyl, ein- oder mehrkerniges $C_3$-$C_6$-Cycloalkyl oder ein- oder mehrkerniges $C_6$-$C_{18}$-Aryl bedeuten und worin |
| $R_3$, $R_3'$, $R_4$, $R_4'$, $R_5$, $R_5'$, $R_6$ und $R_6'$ | gleich oder verschieden sind und H, $C_1$-$C_{18}$-Alkyl, $C_1$-$C_{18}$-Alkoxy oder Chlor oder Brom sind, |

oder

den Rest des $\alpha$,$\alpha$-Bis-(hydroxyphenyl)-diisopropylbenzols bedeutet,

wobei für $n_2 \neq 0$ Ar unter sich gleich oder verschieden sein kann,

durch Mischen der Komponenten untereinander.

**2.** Verwendung der Polymerisatmischungen nach Anspruch 1 zur Herstellung von Folien der verschiedensten Art.

Europäisches Patentamt

# EUROPÄISCHER RECHERCHENBERICHT

Nummer der Anmeldung

EP 91 11 4979

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4 102 859 (E.EIMERS ET AL) 25. Juli 1978<br>* Ansprüche 1,2,8,9 *<br>* Seite 6, Zeile 51; Beispiel 1C * | 1 | C08K5/529<br>C08L51/04<br>C08L33/08 |
| A | US-A-4 073 769 (E. EIMERS ET AL) 14. Februar 1978<br>* Seite 2, Zeile 19 - Zeile 61; Ansprüche 1,2 * | 1 | |

| RECHERCHIERTE SACHGEBIETE (Int. Cl.5 ) |
|---|
| C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 08 JANUAR 1992 | ENGEL H.S.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)